# EUROPÄISCHE PATENTSCHRIFT

(11) **EP 4 690 061 B1**
(45) Veröffentlichungstag und Bekanntmachung des Hinweises auf die Patenterteilung: **25.11.2026**
(21) Anmeldenummer: 24718344.5
(22) Anmeldetag: 28.03.2024
(51) Int. Cl.: G06Q 10/20, G06N 20/00, G06Q 30/0601

(54) **AUTOMATISIERTES IDENTIFIZIEREN UND AKQUIRIEREN VON ERSATZTEILEN FÜR EIN TECHNISCHES SYSTEM**
AUTOMATIC IDENTIFICATION AND ACQUISITION OF REPLACEMENT PARTS FOR A TECHNICAL SYSTEM
IDENTIFICATION ET ACQUISITION AUTOMATIQUES DE PIÈCES DE REMPLACEMENT POUR UN SYSTÈME TECHNIQUE

(30) Priorität: 02.05.2023 DE 102023204026
(43) Veröffentlichungstag der Anmeldung: 11.02.2026
(73) Patentinhaber: Siemens Mobility GmbH, 80997 München (DE)
(72) Erfinder: MARINO, Enrico Pasquale, 91058 Erlangen (DE)
(74) Vertreter: Siemens Patent Attorneys
(86) Internationale Anmeldenummer: PCT/EP2024/058628
(87) Internationale Veröffentlichungsnummer: WO 2024/227541

(56) Entgegenhaltungen:
- US-A1- 2002 156 692
- US-A1- 2007 181 681
- US-A1- 2012 209 470
- US-A1- 2018 137 613
- US-A1- 2018 322 714
- US-A1- 2022 076 213
- JUGROOP GEERISHRAJ ET AL: "Computer Vision based Automated Spare Part Finder App", 2022 INTERNATIONAL CONFERENCE ON APPLIED ARTIFICIAL INTELLIGENCE AND COMPUTING (ICAAIC), IEEE, 9 May 2022 (2022-05-09), pages 1101 - 1106, XP034136103, [retrieved on 20220616], DOI: 10.1109/ICAAIC53929.2022.9792778
- SEELAND MARCO ET AL: "Multi-view classification with convolutional neural networks", PLOS ONE, 12 January 2021 (2021-01-12), pages 1 - 18, XP093053933, Retrieved from the Internet <URL:https://www.researchgate.net/profile/Marco-Seeland/publication/348435087_Multi-view_classification_with_convolutional_neural_networks/links/5ffefb4692851c13fe0c4515/Multi-view-classification-with-convolutional-neural-networks.pdf> [retrieved on 20230613], DOI: 10.1371/journal.pone.0245230

## Beschreibung

Die Erfindung betrifft ein Verfahren zum automatisierten Identifizieren eines Ersatzteils eines technischen Systems. Außerdem betrifft die Erfindung ein Verfahren zum Trainieren eines Verfahrens zum automatisierten Identifizieren eines benötigten Ersatzteils eines technischen Systems. Überdies betrifft die Erfindung ein Identifizierungssystem.

Komplexe technische Systeme, insbesondere Schienenfahrzeuge, weisen eine Vielzahl von integrierten Teilsystemen und Komponenten auf. Sind einzelne Komponenten verschlissen oder defekt oder soll die Architektur des Systems geändert oder erweitert werden, um Funktionalitäten zu ändern oder hinzuzufügen, so müssen technische Teilsysteme oder technische Komponenten ausgetauscht oder hinzugefügt werden.

Kommt es zu einem plötzlichen Defekt und zu einem Ausfall eines technischen Teilsystems oder einer technischen Einzelkomponente, so sollte eine Reparatur so schnell und korrekt wie möglich erfolgen, um die Ausfallzeit des technischen Systems zu minimieren und eine Wiederaufnahme eines zuverlässigen Betriebs des Systems nach möglichst kurzer Zeit zu ermöglichen.

Um dieses Ziel zu erreichen, wird für die meisten komplexen technischen Systeme ein Ersatzteilverzeichnis in Papierform, als lokale Datei oder als über ein Datennetz verfügbare Information erstellt. Dieses Ersatzteilverzeichnis muss im Anwendungsfall von einer speziell geschulten Wartungsperson durchsucht werden, um ein für eine spezielle Wartungsmaßnahme geeignetes Ersatzteil schnell und korrekt zu identifizieren.

Bei sehr komplexen Systemen, bei denen sich einige Komponenten nur in kleinen Details, die mit der Architektur und der Funktionalität des Systems selbst zusammenhängen, voneinander unterscheiden, kann die korrekte Identifizierung des betreffenden Ersatzteils mühsam sein und die Gesamteffizienz des Wartungsvorgangs stark verringert werden. Beispielsweise kann es bei einem solchen Vorgang vorkommen, dass eine stark ähnelnde Komponente wie die benötigte Komponente bestellt wird, die aber die korrekte Funktion des Gesamtsystems nicht wiederherstellt, weil sich ihre Funktionalität von der eigentlich benötigten Komponente mehr oder weniger stark unterscheidet. Derartige Schwierigkeiten treten zum Beispiel bei dem Austausch von Mikroprozessorplatinen auf, die hinsichtlich ihrer Hardwarekonfiguration identisch sind, sich aber hinsichtlich der installierten Software unterscheiden. Häufig wird eine Mikroprozessorplatine mit der neuesten Softwareversion als Ersatzteil bestellt, wobei jedoch diese Softwareversion nicht der Softwareversion der auszutauschenden Mikroprozessorplatine entspricht. In einem solchen Fall kann es nach einem Austausch zu Fehlfunktionen des Systems kommen, wenn die neueste Softwareversion nicht mit den anderen Komponenten des Systems kompatibel ist. Auch kann es durch einen Einbau eines zwar möglicherweise funktionierenden Ersatzteils dazu kommen, dass die Gesamtkonfiguration des Systems geändert wird und eine Zulassung, welche nur für die ursprüngliche Konfiguration erteilt wurde, erlischt. In einem solchen Fall ist es erforderlich, eine neue Zulassung zu beantragen, was erheblich Kosten verursachen kann.

Häufig werden heutzutage Ersatzteilkataloge als elektronische Version in einem Datennetz für geschultes und erfahrenes Wartungspersonal zur Verfügung gestellt. Diese lassen sich von versierten Personen schneller durchsuchen als herkömmliche Verzeichnisse aus Papier. Außerdem können sie von Personen mit unterschiedlichen Endgeräten gleichzeitig eingesehen werden, beispielsweise von einem Techniker in einer Werkstatt und einem Techniker im Lager. Weiterhin können solche über ein Datennetz zugänglichen elektronischen Versionen von Ersatzteilkatalogen leicht aktualisiert werden, um die sich ändernden Varianten von unterschiedlichen Systemkomponenten alle lückenlos aufführen zu können. Auch bieten solche Verzeichnisse manchmal die Möglichkeit, die für eine Instandhaltung benötigten Ersatzteile online zu bestellen, allerdings verbleibt dabei die Schwierigkeit, die auszutauschende Komponente im System sowie im Ersatzteilkatalog schnell und ohne Unterstützung von weiteren Fachexperten korrekt zu identifizieren.

Eine solche korrekte und zügige Identifizierung erfordert bei komplexen Systemen einigen Sachverstand und ein gewisses Training, welches bei dem für eine Reparatur zuständigen Personal nicht immer vorhanden ist. Eine derartige Situation kann daher insbesondere bei Zeitknappheit zu einer falschen Identifizierung einer Komponente und zu einer Bestellung eines falschen Ersatzteils führen.

In US 2007 / 181 681 A1 werden ein System und ein Verfahren zum Identifizieren und Bestellen von Komponenten eines technischen Systems beschrieben. Zur Identifizierung einer Komponente wird neben einer Bildaufnahme auch eine Komponentennummer herangezogen.

In Jugroop Geerishraj et al: "Computer Vision based Automated Spare Part Finder App", 2022 International Conference on applied artificial intelligence and computing (ICAAIC), IEEE, 9. Mai 2022 (2022-05-09), Seiten 1101-1106, XP034136103, DOI: 10.1109/ICAAIC53929.2022.9792778 wird ein Anwendungsprogramm zur Identifizierung von Kraftfahrzeugersatzteilen beschrieben. Komponenten werden anhand von Bilddaten von den Komponenten und einer auf künstlicher Intelligenz basierten Bilderkennung identifiziert.

In US 2022 / 0 076 213 wird die Überwachung von technischen Komponenten eines technischen Systems auf Basis von Videodaten und durch ein auf maschinellem Lernen basierendes Analyseverfahren beschrieben.

In US 2018 / 0 137 613 A1 wird ein Verfahren beschrieben, mit dem ein fehlendes und falsch positioniertes Feldgerät ermittelt werden kann.

In Seeland Marco et al: "Multi-view classification with convolutional neural networks", PLOS ONE, 12. Januar 2021 (2021-01-12), Seiten 1-18, XP093053933 wird eine Objekterkennung unter Anwendung eines faltenden neuronalen Netzwerks beschrieben. Der Klassifizierung eines Objekts werden Ansichten aus unterschiedlichen Perspektiven zugrunde gelegt.

Es besteht also die Aufgabe, einen Wartungsprozess, welcher einen Austausch von technischen Komponenten eines technischen Systems, insbesondere eines Schienenfahrzeugs, umfasst, mit technischen Mitteln effektiver zu gestalten.

Diese Aufgabe wird durch ein Verfahren zum automatisierten Identifizieren eines benötigten Ersatzteils eines technischen Systems gemäß Patentanspruch 1, ein Verfahren zum Trainieren eines Verfahrens zum automatisierten Identifizieren eines benötigten Ersatzteils eines technischen Systems gemäß Patentanspruch 9 sowie ein Identifizierungssystem gemäß Patentanspruch 12 gelöst.

Bei dem erfindungsgemäßen Verfahren zum automatisierten Identifizieren eines benötigten Ersatzteils eines technischen Systems, vorzugsweise eines technischen Systems, welches im Schienenverkehr eingesetzt wird, wie zum Beispiel ein Schienenfahrzeug oder ein Teil eines Schienenfahrzeugs, wird zunächst eine Lokalisierungsinformation hinsichtlich der Position und des Typs einer auszutauschenden Komponente des technischen Systems auf Basis einer vorab durchgeführten Fehleranalyse des technischen Systems ermittelt. Die Fehleranalyse kann beispielsweise durch eine Wartungsperson erfolgen, die das defekte Bauteil, das den Ausfall verursacht hat, zurückverfolgen kann. Das mobile elektronische Endgerät umfasst vorzugsweise ein tragbares elektronisches Endgerät, besonders bevorzugt ein Smartphone oder ein Tablet oder eine andere Form eines portablen elektronischen Computers und/oder Kommunikationssystems. Das mobile elektronische Endgerät umfasst eine Bildaufnahmeeinheit zur optischen Erfassung von Bilddaten.

Weiterhin werden Bilddaten auf Basis der Lokalisierungsinformation von der lokalisierten auszutauschenden Komponente durch das mobile elektronische Endgerät aufgenommen. Aufgrund der Kenntnis des allgemeinen Typs oder der allgemeinen Gestalt und der Position der auszutauschenden Komponente kann eine Bildaufnahme des mobilen elektronischen Endgeräts in dem technischen System gezielt erfolgen.

Anschließend erfolgt ein automatisiertes Identifizieren der auszutauschenden Komponente auf Basis der Bilddaten und auf Basis von Ersatzteildaten einer elektronischen Ersatzteildatenbank, wobei das Identifizieren der auszutauschenden Komponente durch Anwendung eines KI-basierten Algorithmus erfolgt. Als Ersatzteildaten sollen die Daten verstanden werden, die typischerweise in einem Wartungshandbuch oder einem Ersatzteilkatalog zu Ersatzteilen eines technischen Systems verzeichnet sind. Insbesondere umfassen die Ersatzteildaten Informationen für eine eindeutige und exakte Identifizierung des Ersatzteils, Bilddaten, Daten über die Funktion des Ersatzteils und Informationen, in welchen spezifischen technischen Systemen ein jeweiliges Ersatzteil eingebaut werden darf und wie der Austausch bzw. Einbau und Ausbau des jeweiligen Ersatzteils erfolgen kann. Weitere Information können die Bezugsquelle des Ersatzteils und sonstige Informationen, welche für eine Bestellung eines solchen Ersatzteils benötigt werden, betreffen.

Schließlich wird das benötigte Ersatzteil auf Basis der identifizierten auszutauschenden Komponente und der Ersatzteildaten automatisiert identifiziert. In der Regel ist das benötigte Ersatzteil vom Typ her identisch mit der auszutauschenden Komponente. Es kann aber auch sinnvoll sein, auf Basis aktualisierter Ersatzteildaten der Ersatzteildatenbank ein Nachfolge-Ersatzteil mit verbesserten technischen Eigenschaften anstelle der alten Komponente in das technische System einzubauen.

Vorteilhaft werden durch das erfindungsgemäße Verfahren zur Erkennung von zu bestellenden Ersatzteilen keine für diesen Zweck speziell ausgebildete Wartungspersonen benötigt, da die Wartungsperson den automatisiert ermittelten Informationen und Vorschlägen in der Regel einfach nur zu folgen braucht.

Das erfindungsgemäße Verfahren bietet außerdem den Vorteil, dass die Identifizierung von Ersatzteilen auch von Personen mit einer rein allgemeinen technischen Ausbildung durchgeführt werden kann, d.h. einer Person ohne detaillierte Kenntnisse der Systemarchitektur des betreffenden technischen Systems, ohne detaillierte Kenntnisse der Struktur des zugehörigen Ersatzteilkatalogs und ohne besondere Erfahrung mit ähnlichem Suchen innerhalb des zu wartenden Systems.

Das erfindungsgemäße Verfahren bietet auch den Vorteil, dass keine spezielle Hardware erforderlich ist. Vielmehr wird einer Wartungsperson ein Anwendungsprogramm zur Verfügung gestellt, welches dazu eingerichtet ist, das erfindungsgemäße Identifizierungsverfahren auf einem mobilen Endgerät der Wartungsperson, welches die Wartungsperson für ihre Wartungsarbeiten verwendet, auszuführen. Das Anwendungsprogramm ist dazu eingerichtet, auf Basis von Bilddaten, die mit der Bildaufnahmeeinheit des mobilen Endgeräts aufgenommen werden, eine auszutauschen Komponente eines technischen Systems zu erkennen und den Bediener schnell zur Identifizierung des zu bestellenden Ersatzteils zu führen und es schließlich bei m Hersteller oder einem anderen Originalersatzteilhändler zu bestellen.

Auch das Risiko eines Bestellfehlers wird reduziert, da die Auswahl des Ersatzteils automatisiert erfolgt und Flüchtigkeitsfehler oder Fehler bei der Auswahl und Bestellung eines Ersatzteils aufgrund mangelnder Kompetenz verhindert werden.

Weiterhin werden bei dem erfindungsgemäßen Verfahren zum automatisierten Identifizieren eines benötigten Ersatzteils eines technischen Systems bei dem Schritt des automatisierten Identifizierens der auszutauschenden Komponente die folgenden Teilschritte durchgeführt: Es wird ermittelt, ob die auszutauschende Komponente eindeutig identifizierbar ist. Dabei erfolgt die Ermittlung auf Basis eines Vergleichs der Bilddaten mit den Ersatzteildaten der elektronischen Ersatzteildatenbank. Den erfassten Bilddaten werden Ersatzteile und deren Identifizierungsdaten in der elektronischen Ersatzteildatenbank zugeordnet. Ist nur ein Ersatzteil eindeutig den erfassten Bilddaten zuzuordnen, so wird die Identifizierung als eindeutig bewertet. Werden mehrere unterschiedliche Ersatzteile mit unterschiedlichen Identifizierungsdaten den erfassten Bilddaten zugeordnet, so wird die Identifizierung als nicht eindeutig eingestuft. Für Komponenten, von denen mehrere Versionen existieren, müssen zusätzliche Erkennungsschritte durchgeführt werden, wobei nach einer optischen Erkennung einer Komponente eine Erkennung der jeweiligen Version erfolgt.

In einem solchen Fall, in dem die auszutauschende Komponente nicht eindeutig identifizierbar ist, wird eine spezifische Aufforderung an eine Wartungsperson zu einer geeigneten Interaktion mit dem mobilen elektronischen Endgerät auf Basis der Bilddaten und der Ersatzteildaten der elektronischen Ersatzteildatenbank ermittelt bzw. an diese Wartungsperson übermittelt. Die Wartungsperson wird also dazu aufgefordert, eine Maßnahme zu ergreifen, um eine eindeutige Identifizierung der auszutauschenden Komponente zu ermöglichen. Bei diesem Vorgang können die ermittelten "Kandidaten" und diesen Kandidaten zugeordnete Informationen aus der Ersatzteildatenbank der Wartungsperson die eindeutige Identifizierung erleichtern.

Die spezifische Aufforderung zur eindeutigen Identifizierung der auszutauschenden Komponente weist eine Aufforderung zu der folgenden spezifischen Interaktion auf:

Es wird der Wartungsperson eine automatisierte Aufforderung zum Markieren und/oder Segmentieren von in den Bilddaten dargestellten Identifizierungscodes der auszutauschenden Komponente übermittelt, vorzugsweise angezeigt. Ein solcher Vorgang kann zum Beispiel das Einrahmen von Codes, insbesondere alphanumerischen Codes, Bar-Codes, QR-Codes, die bei der Produktion oder bei dem Einbau auf der Komponente, beispielsweise mit Hilfe von selbstklebenden Etiketten oder Metallschildern angebracht wurden, oder Ähnlichem als Identifizierungscodes in den Bilddaten, welche auf der Anzeigeeinheit des mobilen elektronischen Endgeräts angezeigt werden, umfassen. Die Wartungsperson kann also einen Bereich in den Bilddaten, der für eine Identifizierung einer auszutauschenden Komponente relevant ist, einrahmen. Es kann ein sehr kleiner Bereich eines Schemas (z. B. Schaltplan) eingerahmt werden, in dem die Komponente visuell erkennbar ist. Das wäre ein Vorteil bei Komponenten, die sich nicht so einfach und unmittelbar durch eine Bildaufnahme des mobilen Endgeräts erreichen (einrahmen) lassen. Die Wartungsperson wird also bei der Wahl der richtigen Version des Ersatzteils mit der am besten geeigneten Methode geführt.

Bei dem erfindungsgemäßen Verfahren zum Trainieren eines Verfahrens zum automatisierten Identifizieren eines benötigten Ersatzteils eines technischen Systems. Insbesondere zum Trainieren des Schritts des vorgenannten Verfahrens zum automatisierten Identifizieren der auszutauschenden Komponente auf Basis der Bilddaten und auf Basis von Ersatzteildaten einer elektronischen Ersatzteildatenbank werden zunächst gelabelte Trainingsdaten generiert, welche Ersatzteildaten einer Ersatzteildatenbank von technischen Komponenten eines technischen Systems, durch ein mobiles Endgerät erfasste Bilddaten der technischen Komponenten des technischen Systems sowie korrekte Identifizierungsdaten von technischen Komponenten zu den erfassten Bilddaten umfassen. Ein solches Training ist insbesondere dann effektiv, wenn das erfindungsgemäße Verfahren zum automatisierten Identifizieren eines benötigten Ersatzteils eines technischen Systems KI-basiert (KI ist ein Akronym für "künstliche Intelligenz") implementiert wird. D.h., automatisierte Identifizierung erfolgt auf Basis eines KI-basierten Modells. Das beschriebene Trainingsverfahren stellt eine Form des sogenannten maschinellen Lernens dar, bei dem das KI-basierte Modell an die gelabelten Trainingsdaten angepasst wird. Die Anpassung erfolgt vorzugsweise durch eine iterative Optimierung einer Zielfunktion sowie durch eine Nutzung eines sogenannten Bachpropagation-Algorithmus, mit dem Knoten und Gewichtungen eines künstlichen neuronalen Netzes an die gelabelten Trainingsdaten angepasst werden. Bevorzugt umfassen die Trainingsdaten besonders detaillierte dreidimensionale Daten der Komponenten, welche bevorzugt bei der Entwicklung der Komponenten und/oder des Systems, dem die Komponenten zugeordnet sind, durch CAD-Programme erzeugt wurden. Derartige dreidimensionale Daten liegen vorzugsweise im STEP-Format vor. Derartige Daten stellen viele Hersteller von technischen Komponenten bereits in den frühen Entwurfsphasen eines technischen Systems zur Verfügung. STEP ist ein Standard zur Beschreibung von Produktdaten, der physische und funktionale Aspekte umfasst. Aufgrund der Standardisierung ist STEP für den Datenaustausch zwischen unterschiedlichen Systemen im Produktentstehungsprozess gut geeignet.

Das Training ist ein schrittweiser Prozess. In einem ersten Schritt werden die CAD-basierten Daten (CAD ist eine Abkürzung für "Computer Aided Design", zu Deutsch: "Rechnerunterstütztes Konstruieren") aller austauschbaren Komponenten (im Englischen als "Line Replaceable Units" bezeichnet, abgekürzt mit "LRU") in einer Ersatzteildatenbank gespeichert. In einem zweiten Schritt wird vorzugsweise jede LRU mit mehreren leicht zu bearbeitenden und vorzugsweise komprimierten Bilddaten-Dateien, vorzugsweise "jpg"-Bildern, verknüpft. Diese Bilddaten-Dateien werden durch Bildaufnahmen von den Komponenten erzeugt und liefern zusätzliche Informationen für eine automatisierte Identifizierung der auszutauschenden Komponenten. Die Bilddaten-Dateien umfassen vorzugsweise auch Bilder der Komponente, die in einem elektrischen, pneumatischen oder mechanischen Schema (z. B. im "dwg"-Format) dargestellt sind.

Es kann sogar sein, dass der Bediener nicht einmal in der Lage ist, das fehlerhafte Bauteil physisch zu erreichen, und es vorzieht, statt des physischen Bauteils eine Darstellung auf den Schaltplänen für das Wartungspersonal zu erstellen. Auf diesen Schemas sind nämlich einige Informationen enthalten, die zur Identifizierung des Bauteils beitragen können, auch wenn es nicht physisch zu sehen ist.

Das Training kann also bereits vor Inbetriebnahme eines technischen Systems erfolgen, so dass das erfindungsgemäße Verfahren zum automatisierten Identifizieren eines benötigten Ersatzteils eines technischen Systems bereits bei einem Start der Nutzung des technischen Systems durch einen Anwender in besonders hoher Qualität zur Verfügung steht bzw. ausgeführt werden kann. Zusätzlich kann das Training auch während des Betriebs des technischen Systems durchgeführt werden und die Präzision des Verfahrens verbessert werden.

Weiterhin wird eine automatisierte Identifizierung eines Ersatzteils auf Basis der erfassten Bilddaten durch das erfindungsgemäße Verfahren zum automatisierten Identifizieren eines benötigten Ersatzteils eines technischen Systems, welches Verfahren durch ein KI-basiertes Modell implementiert ist, durchgeführt.

Schließlich erfolgt ein Anpassungsschritt des dem automatisierten Verfahren zugrundeliegenden KI-basierten Modells auf Basis der automatisiert ermittelten Identifizierungsdaten und der korrekten Identifizierungsdaten der technischen Komponenten und der zugeordneten Ersatzteile der gelabelten Trainingsdaten. Vorteilhaft erfolgt eine flexible Anpassung des erfindungsgemäßen Verfahrens zum automatisierten Identifizieren eines benötigten Ersatzteils eines technischen Systems an eine spezifische Anwendung, insbesondere, wenn die Trainingsdaten technische Komponenten aus dem späteren Anwendungsgebiet umfasst. Der massive Einsatz solcher Formen der künstlichen Intelligenz kann den zusätzlichen Vorteil bieten, dass im Falle der Verwendung von Algorithmen des maschinellen Lernens deren Wirksamkeit und die Genauigkeit von deren Ergebnissen im Laufe der Anwendungszeit zunehmen. Insbesondere können Algorithmen des maschinellen Lernens während ihrer Nutzung weiter trainiert werden, indem Bilddaten und Ersatzteildaten sowie Identifizierungsdaten, die im Rahmen einer Wartung genutzt werden, in das Training einbezogen werden können.

Das erfindungsgemäße Identifizierungssystem weist eine Lokalisierungseinheit zum Lokalisieren einer auszutauschenden Komponente eines technischen Systems auf Basis einer vorab durchgeführten Fehleranalyse des technischen Systems auf. Die Lokalisierungseinheit gibt einer Wartungsperson Informationen über die Position der auszutauschenden Komponente in dem technischen System. Beispielsweise wird der Wartungsperson das technische System bildlich angezeigt und die auszutauschende Komponente in der bildlichen Darstellung markiert, so dass die Wartungsperson Informationen darüber bekommt, an welcher Position in dem technischen System sich die auszutauschende Komponente befindet.

Das erfindungsgemäße Identifizierungssystem weist auch eine Bildaufnahmeeinheit zum Aufnehmen von Bilddaten von der lokalisierten auszutauschenden Komponente auf.

Teil des erfindungsgemäßen Identifizierungssystems ist auch eine elektronische Ersatzteildatenbank, welche Ersatzteildaten bezüglich austauschbarer Komponenten eines technischen Systems umfasst. Im Gegensatz zu herkömmlichen KI-basierten Suchsystemen, mit denen das gesamte Internet nach Bildern durchsucht wird und die eine Vielzahl ähnlicher Objekte als Ergebnisse zurückliefern, ist bei der vorliegenden Erfindung der Bereich der Suche nach dem Ersatzteil auf den Bereich des zu wartenden Systems beschränkt. Die Suche findet nämlich nicht im gesamten Internet statt, sondern nur in einer ganz bestimmten Datenbank, vorzugsweise der Ersatzteildatenbank.

Das erfindungsgemäße Identifizierungssystem umfasst auch eine Identifizierungseinheit zum automatisierten Identifizieren der auszutauschenden Komponente auf Basis der Bilddaten und auf Basis von Ersatzteildaten der elektronischen Ersatzteildatenbank und zum automatischen Identifizieren des benötigten Ersatzteils auf Basis der identifizierten auszutauschenden Komponente und der Ersatzteildaten, wobei das Identifizieren der auszutauschenden Komponente durch Anwendung eines KI-basierten Algorithmus erfolgt. Das erfindungsgemäße Identifizierungssystem teilt die Vorteile des erfindungsgemäßen Verfahrens zum automatisierten Identifizieren eines benötigten Ersatzteils eines technischen Systems.

Dabei umfasst der Schritt des automatisierten Identifizierens der auszutauschenden Komponente die Teilschritte:
- Ermitteln, ob die auszutauschende Komponente eindeutig identifizierbar ist, auf Basis eines Vergleichs der Bilddaten mit den Ersatzteildaten der elektronischen Ersatzteildatenbank,
- für den Fall, dass die auszutauschende Komponente nicht eindeutig identifizierbar ist, Ermitteln einer spezifischen Aufforderung an eine Wartungsperson zu einer geeigneten Interaktion mit dem mobilen elektronischen Endgerät zur Identifizierung der auszutauschenden Komponente auf Basis der Bilddaten und der Ersatzteildaten der elektronischen Ersatzteildatenbank, wobei die spezifische Aufforderung eine automatisierte Aufforderung zum Markieren und/oder Segmentieren von in den Bilddaten dargestellten Identifizierungscodes der auszutauschenden Komponente aufweist.

Ein Teil der zuvor genannten Komponenten des erfindungsgemäßen Identifizierungssystems, insbesondere die Lokalisierungseinheit, die elektronische Ersatzteildatenbank und die Identifizierungseinheit, kann ganz oder teilweise in Form von Softwaremodulen in einem Prozessor eines entsprechenden Rechensystems realisiert werden, **z.B.** von einem mobilen elektronischen Endgerät oder einem anderen Rechensystem, welches einer Wartungsperson zur Verfügung steht. Eine weitgehend softwaremäßige Realisierung hat den Vorteil, dass auch schon bisher in der Wartung von technischen Systemen verwendete mobile elektronische Endgeräte und Rechensysteme auf einfache Weise durch ein Software-Update nachgerüstet werden können, um auf die erfindungsgemäße Weise zu arbeiten.

Insofern wird die Aufgabe auch durch ein entsprechendes Computerprogrammprodukt mit einem Computerprogramm gelöst, welches direkt in ein Rechensystem, vorzugsweise eines mobilen elektronischen Endgeräts ladbar ist, mit Programmabschnitten, um die Schritte des erfindungsgemäßen Verfahrens zum automatisierten Identifizieren eines benötigten Ersatzteils eines technischen Systems zur Lokalisierung einer auszutauschenden Komponente, zur Bildaufnahme der auszutauschenden Komponente und zur Identifizierung der auszutauschenden Komponente und zur Identifizierung des an Stelle der auszutauschenden Komponente einzubauenden Ersatzteils sowie die Schritte des erfindungsgemäßen Verfahren zum Trainieren eines Verfahrens zum automatisierten Identifizieren eines benötigten Ersatzteils eines technischen Systems zum Generieren von Trainingsdaten, zum Durchführen des automatisierten Identifizierens eines Ersatzteils und zum Anpassen des automatisierten Verfahrens auf Basis der automatisiert ermittelten Identifizierungsdaten und der korrekten Identifizierungsdaten auszuführen, wenn das Programm in dem Rechensystem ausgeführt wird. Vorteilhaft kann ein solches Computerprogrammprodukt neben dem Computerprogramm gegebenenfalls zusätzliche Bestandteile, wie **z. B.** eine Dokumentation, und/oder zusätzliche Komponenten, auch Hardware-Komponenten, wie z. B. Hardware-Schlüssel (Dongles etc.) zur Nutzung der Software, umfassen.

Insbesondere wird für die Ausführung des erfindungsgemäßen Verfahrens auch keine spezielle Hardware benötigt, da es genügt, wenn eine Wartungsperson ein spezielles Anwendungsprogramm aus einem Datennetz oder einer anderen Datenquelle bezieht bzw. herunterlädt und das Anwendungsprogramm auf seinem mobilen elektronischen Endgerät installiert. Insbesondere kann das Anwendungsprogramm nach einer Authentifizierung des Benutzerprofils der Wartungsperson und einer Zulassung für einen Zugriff auf die Bildaufnahmeeinheit des mobilen elektronischen Endgeräts mit Hilfe eines KI-basierten Algorithmus einzelne Komponenten eines technischen Systems erkennen und die Wartungsperson schnell zur Identifizierung eines zu bestellenden Ersatzteils führen und es automatisiert oder teilautomatisiert bei dem Hersteller oder einem anderen Originalersatzteilhändler bestellen. Besonders vorteilhaft ist es, wenn das Anwendungsprogramm durch eine Eingabe eines spezifischen Identifizierungscodes eines technischen Systems, vorzugsweise eines alphanumerischen Codes oder eines QR-Codes oder eines Bar-Codes, welcher an dem betreffenden technischen System angebracht ist und ebenfalls in einer Dokumentation des technischen Systems aufgeführt wird oder in sonstiger Weise in für eine Wartung des technischen System zugänglichen Bereichen angezeigt wird, aus einem Datennetz oder einer sonstigen zugänglichen Datenquelle einfach heruntergeladen werden kann. Vorteilhaft wird der Wartungsperson die Suche nach dem richtigen Anwendungsprogramm für eine Identifizierung eines Ersatzteils eines spezifischen technischen Systems erleichtert.

Zum Transport zum Rechensystem und/oder zur Speicherung an oder in dem Rechensystem kann ein computerlesbares Medium, z. B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann hierzu z. B. einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

Die spezifische Aufforderung zur eindeutigen Identifizierung der auszutauschenden Komponente weist bevorzugt eine Aufforderung zu einer der folgenden spezifischen Interaktionen auf:
Es wird für den Fall, dass von der Wartungsperson keine Markierung und/oder Segmentierung vorgenommen wurde, der Wartungsperson bevorzugt eine automatisierte Aufforderung zur Eingabe eines Identifizierungscodes der auszutauschenden Komponente, beispielsweise eines Referenzcodes, insbesondere einer Seriennummer oder eines Inbetriebnahmedatums, übermittelt bzw. angezeigt. Für den Fall, dass es sich bei der auszutauschenden Komponente um eine elektrische oder pneumatische Komponente handelt, wird bevorzugt der Wartungsperson eine automatisierte Aufforderung zur Eingabe einer Komponentenbezeichnung auf Basis eines vorzugsweise angezeigten elektrischen oder pneumatischen Schaltplans des technischen Systems übermittelt, vorzugsweise angezeigt. Vorteilhaft erhält die Wartungsperson gegebenenfalls auf Basis zusätzlicher gespeicherter Informationen die Möglichkeit, die Identifizierung selbst vorzunehmen, dabei erfolgt die Identifizierung vorzugsweise auf Basis der bereits erfolgten Vorermittlung, so dass der Wartungsperson die Identifizierung erleichtert wird.

Zur Sicherheit umfasst das automatisierte Identifizieren der auszutauschenden Komponente auf Basis der Bilddaten bevorzugt eine Präsentation von vorläufigen Identifizierungsdaten der identifizierten auszutauschenden Komponente auf dem mobilen Endgerät der Wartungsperson und eine Aufforderung zu einer Eingabe einer Bestätigung einer korrekten Identifizierung der auszutauschenden Komponente durch die Wartungsperson. Vorteilhaft muss das Ergebnis der automatisierten Identifizierung noch von einem Menschen bestätigt werden. Durch die Involvierung einer zweiten Instanz wird die Wahrscheinlichkeit einer falschen Identifizierung stark reduziert.

Für den Fall, dass keine eindeutige oder keine korrekte automatisierte Identifizierung der auszutauschenden Komponente erfolgt ist, wird die Wartungsperson bevorzugt automatisiert dazu aufgefordert, auf Basis der Ersatzteildaten der elektronischen Ersatzteildatenbank die Identifizierung durch Identifizierung und Auswahl der auszutauschen Komponente in der elektronischen Ersatzteildatenbank manuell vorzunehmen, und hierzu werden die Ersatzteildaten der elektronischen Ersatzteildatenbank der Wartungsperson angezeigt. Die Wartungsperson kann also ersatzweise auch eine herkömmliche Vorgehensweise bei der Identifizierung des Ersatzteils wählen, wenn die automatisierte Identifizierung nicht zu einem korrekten oder eindeutigen Ergebnis geführt hat.

Zusätzlich wird bevorzugt für diesen Fall, dass keine eindeutige oder keine korrekte automatisierte Identifizierung erfolgt ist, an die Wartungsperson eine Aufforderungsnachricht automatisiert übermittelt, detaillierte Bilddaten aus unterschiedlichen Perspektiven von der auszutauschenden Komponente mit dem mobilen Endgerät zu erfassen. Auf Basis der detaillierten Bilddaten werden bevorzugt ergänzte Ersatzteildaten automatisiert generiert, wobei die detaillierten Bilddaten und die Informationen über die manuell identifizierte und ausgewählte auszutauschende Komponente den Ersatzteildaten der elektronischen Ersatzteildatenbank hinzugefügt werden. Diese ergänzten und verbesserten Ersatzteildaten werden anschließend bevorzugt für ein automatisiertes Training der automatisierten Identifizierung auf Basis der ergänzten Ersatzteildaten der elektronischen Ersatzteildatenbank genutzt. Vorteilhaft wird das automatisierte Verfahren zur Identifizierung einer auszutauschenden Komponente eines technischen Systems während der Nutzung dieses Verfahrens ständig weiter verbessert, so dass die Präzision und Zuverlässigkeit des Verfahrens sowie die Breite des Anwendungsgebiets, auf das das Verfahren anwendbar ist, immer weiter gesteigert werden können.

Diese Vorgehensweise funktioniert besonders gut, wenn das Identifizieren der auszutauschenden Komponente durch Anwendung eines KI-basierten Algorithmus erfolgt. Ein solcher KIbasierter Algorithmus wird durch maschinelles Lernen trainiert und kann im Gegensatz zu einer starren oder parametrisierbaren Modellstruktur besonders flexibel an sich ändernde Anforderungen angepasst werden.

Nach erfolgter Identifizierung der auszutauschenden Komponente können Zusatzschritte durchgeführt werden, um die Wartungsperson durch den Bestell- und Austauschprozess zu führen. Vorteilhaft können auch unerfahrene Wartungspersonen den Bestellvorgang leicht meistern. Weiterhin wird der Zeitaufwand für den Bestellvorgang reduziert, da die Wartungsperson nicht selbst überlegen muss, welcher Schritt als nächstes ausgeführt werden muss, welche Informationen dazu benötigt werden und wie der Schritt im Einzelnen realisiert werden kann.

Bevorzugt wird also mindestens einer der folgenden automatisierten Zusatzschritte für einen Austauschprozess der identifizierten auszutauschenden Komponente, vorzugsweise über das mobile elektronische Endgerät ausgeführt: Es wird eine Aufforderung zum Bestellen eines passenden Ersatzteils für die identifizierte auszutauschende Komponente an die Wartungsperson übermittelt bzw. vorzugsweise dieser Wartungsperson angezeigt und es erfolgt eine Entgegennahme einer Eingabe der Wartungsperson zur Bestellung des passenden Ersatzteils. Vorteilhaft kann die Wartungsperson die Identifizierung und die Bestellung in einem einzigen gemeinsamen Prozess durchführen.

Auch bevorzugt erfolgt ein Anzeigen einer Aufforderung zur Eingabe der Anzahl der zu bestellenden Ersatzteile und eine Entgegennahme der Eingabe der Wartungsperson bezüglich der Anzahl der zu bestellenden Ersatzteile. Vorteilhaft wird die korrekte Anzahl des bereits identifizierten Ersatzteils ermittelt und in den Bestellvorgang einbezogen.

Ebenfalls bevorzugt erfolgt ein Anzeigen von empfohlenen Werkzeugen zu der identifizierten auszutauschenden Komponente und/oder von empfohlenem technischem Zubehör zu der identifizierten auszutauschenden Komponente und ein Anzeigen einer Aufforderung zur Auswahl und Bestellung des empfohlenen Werkzeugs und/oder des technischen Zubehörs und eine Entgegennahme einer Eingabe der Auswahl und Bestellung der Wartungsperson. Empfohlenes sinnvolles technisches Zubehör umfasst vorzugsweise mechanische Befestigungssätze, wie zum Beispiel Verschraubungsmaterial, oder elektrische und/oder pneumatische Verbindungselemente, Fixier- oder Endbearbeitungsmaterial, Dichtungen oder andere zusätzliche Teile, die bei einem Austausch einer Komponente häufig beschädigt werden. Derartiges Zubehör ist vorzugsweise in Form eines Austauschsatzes gebündelt. Vorteilhaft wird der Austausch der betreffenden Komponente durch die Verfügbarkeit und die kombinierte Bestellung von Werkzeug und geeignetem Zubehör zusammen mit dem benötigten Ersatzteil ermöglicht bzw. erleichtert.

Außerdem erfolgt als bevorzugter Zusatzschritt ein Anzeigen einer Aufforderung zur Eingabe einer Lieferadresse für die bestellten Ersatzteile und das bestellte Zubehör und eine Entgegennahme einer Eingabe einer Lieferadresse der Wartungsperson.

Ebenfalls in Form eines bevorzugten Zusatzschritts erfolgt ein Anzeigen einer Mitteilung mit einer Bestätigung und Zusammenfassung der Bestellung, um den Abschluss des Bestellvorgangs des benötigten Ersatzteils zu dokumentieren.

Nachdem das bestellte Ersatzteil geliefert wurde, werden bevorzugt weiterte Bilddaten von dem gelieferten Ersatzteil aufgenommen und es wird auf Basis der Bilddaten und der Ersatzteildaten der elektronischen Ersatzteildatenbank automatisiert geprüft, ob das gelieferte Ersatzteil mit dem identifizierten Ersatzteil übereinstimmt. Vorteilhaft wird die Wartungsperson also auch bei der Prüfung des gelieferten Ersatzteils unterstützt, wodurch der Austauschvorgang zuverlässiger und sicherer wird.

Um der Wartungsperson den Ausbau der auszutauschenden Komponente und den Einbau des gelieferten Ersatzteils zu erleichtern, werden bevorzugt nach Lieferung eines Ersatzteils auf Basis der Identifizierungsdaten des gelieferten Ersatzteils und auf Basis eines elektronischen Wartungshandbuchs der Wartungsperson Anweisungen für einen Austausch der identifizierten auszutauschenden Komponente durch das gelieferte Ersatzteil angezeigt.

Um das Verfahren zum Identifizieren eines benötigten Ersatzteils eines technischen Systems weiter zu verbessern, werden bevorzugt zur Generierung der gelabelten Trainingsdaten Bilddaten von den technischen Komponenten in einem Zustand, in dem die technischen Komponenten in dem technischen System eingebaut sind, aufgenommen, wobei die technischen Komponenten besonders bevorzugt aus unterschiedlichen Sichtwinkeln aufgenommen werden. Vorteilhaft wird die Datenbasis für ein Training des erfindungsgemäßen Verfahrens zum Identifizieren eines benötigten Ersatzteils eines technischen Systems während einer Nutzung des Verfahrens immer weiter verbessert, so dass auch die Zuverlässigkeit des Verfahrens immer weiter verbessert wird.

Die Erfindung wird im Folgenden unter Hinweis auf die beigefügten Figuren anhand von Ausführungsbeispielen noch einmal näher erläutert. Es zeigen:
FIG 1 eine schematische Darstellung eines Szenarios, bei dem eine Komponente eines technischen Systems ausgetauscht werden soll,
FIG 2 ein Flussdiagramm, welches ein Verfahren zum automatisierten Identifizieren eines benötigten Ersatzteils eines technischen Systems gemäß einem Ausführungsbeispiel der Erfindung veranschaulicht,
FIG 3 ein Flussdiagramm, welches den Schritt 2.III des in FIG 2 veranschaulichten Verfahrens zum automatisierten Identifizieren eines benötigten Ersatzteils eines technischen Systems im Detail veranschaulicht,
FIG 4 ein Flussdiagramm, welches den in FIG 3 dargestellten Schritt 2.IIIb im Detail zeigt,
FIG 5 ein Flussdiagramm, welches zusätzliche Schritte des in FIG 2 bis FIG 4 gezeigten Verfahrens zum automatisierten Identifizieren eines benötigten Ersatzteils eines technischen Systems, die sich an die in FIG 2 gezeigten Schritte 2.I bis 2.IV anschließen können, veranschaulicht,
FIG 6 ein Flussdiagramm, welches weitere Schritte des in FIG 2 bis FIG 5 gezeigten Verfahrens zum automatisierten Identifizieren eines benötigten Ersatzteils eines technischen Systems veranschaulicht,
FIG 7 ein Flussdiagramm, welches ein Verfahren zum Trainieren eines Verfahrens zum automatisierten Identifizieren eines benötigten Ersatzteils eines technischen Systems veranschaulicht,
FIG 8 eine schematische Darstellung eines Identifizierungssystems gemäß einem Ausführungsbeispiel der Erfindung.

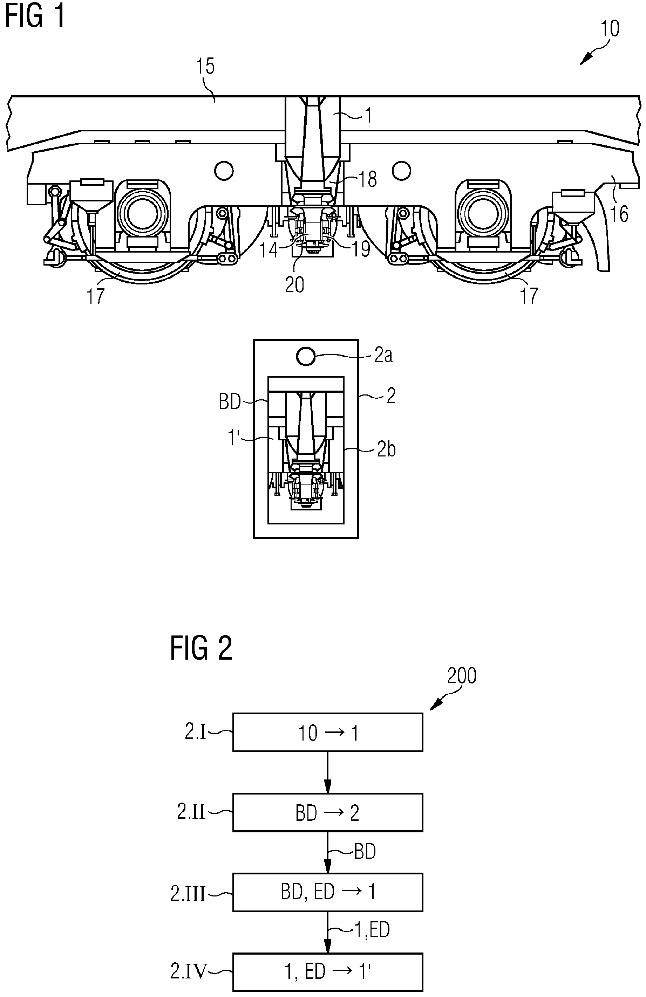

In FIG 1 ist eine schematische Darstellung eines technischen Systems 10, in diesem konkreten Fall ein Fahrwerk mit einem Fahrgestell 16 bzw. Drehgestell mit Rädern 17, gezeigt, welches durch einen Drehzapfen 1 an einem Wagenkasten 15 montiert ist bzw. mit dem Drehzapfen 1 des Wagenkastens 15 einen Formschluss bildet. Das Fahrgestell 16 weist mittig einen Aufnahmebereich 18 auf, welcher an seinem unteren Ende eine Mehrzahl von Gummi-Federelementen 19 umfasst. Der Wagenkasten 15, der in FIG 1 im oberen Teilabschnitt der bildlichen Darstellung gezeigt ist, weist mittig den bereits erwähnten Drehzapfen 1 auf. Dieser Drehzapfen 1 greift in den Aufnahmebereich 18 des Fahrgestells 16 ein. Der Drehzapfen 1 weist ein verjüngtes Zapfenende 14 auf, das zwischen den Gummi-Federelementen 19 angeordnet ist. Eine Abhebesicherung 20 ist durch den Kopfbereich des Zapfenendes 14 durchgeführt.

Das in FIG 1 gezeigte mobile Endgerät 2, in diesem Ausführungsbeispiel ein Smartphone, weist ein Anwendungsprogramm auf, welches dazu eingerichtet ist, das im Zusammenhang mit den Figuren 2 bis 4 veranschaulichte Verfahren zum automatisierten Identifizieren eines benötigten Ersatzteils eines technischen Systems auszuführen. Mit diesem Verfahren wird zunächst eine Lokalisierung einer auszutauschenden Komponente 1, in diesem Fall der Drehzapfen 1, vorgenommen. Beispielsweise wird zunächst durch das Verfahren in einer Wartungsdatenbank ermittelt, ob eine Komponente und welche Komponente des abgebildeten Fahrwerks erneuert werden muss. Erhält das Anwendungsprogramm die Information, dass der Drehzapfen 1 erneuert werden muss, so werden als nächstes mit Hilfe des mobilen elektronischen Endgeräts 2, in diesem Beispiel ein Smartphone, Bilddaten BD von dem in FIG 1 gezeigten Drehzapfen 1 aufgenommen. Hierzu weist das mobile elektronische Endgerät 2 eine Bildaufnahmeeinheit 2a, insbesondere eine Kamera, auf. Anschließend erfolgt eine Identifizierung der auszutauschen Komponente 1, in diesem Fall ein Drehzapfen 1, und des entsprechenden Ersatzteils 1', dessen Typ in der Regel mit der auszutauschen Komponente 1 identisch ist, auf Basis der generierten Bilddaten BD sowie auf Basis von Zusatzinformationen bzw. Ersatzteildaten ED, welche aus einer Ersatzteildatenbank 3 gewonnen werden. Diese Ersatzteildaten ED umfassen spezifische Informationen zu den verfügbaren Ersatzteilen, insbesondere zu den als Ersatzteil 1' verfügbaren Drehzapfen. Diese spezifischen Informationen können insbesondere Bilddaten, Typenbezeichnungen, die Typenbezeichnungen der technischen Systeme 10, in die die einzelnen Ersatzteile 1' einbaubar sind, usw. umfassen. Das identifizierte Ersatzteil 1' wird schließlich der Wartungsperson auf einer Anzeigeeinheit 2b des mobilen elektronischen Endgeräts 2 angezeigt. Eine Wartungsperson muss sich also nicht mehr um die Identifizierung der auszutauschenden Komponenten 1 und das Heraussuchen eines passenden Ersatzteils 1' im Ersatzteilkatalog kümmern. Sie muss lediglich den automatisiert generierten Vorschlag für ein Ersatzteil 1' auf ihrem mobilen Endgerät bzw. Smartphone bestätigen, und sogleich wird das passende Ersatzteil 1' bestellt.

In FIG 2 ist ein Flussdiagramm 200 gezeigt, mit dem ein Verfahren zum automatisierten Identifizieren eines benötigten Ersatzteils 1' eines technischen Systems 10 veranschaulicht wird.

Bei dem Schritt 2.I wird zunächst eine auszutauschende Komponente 1 des technischen Systems 10 auf Basis einer vorab durchgeführten Fehleranalyse des technischen Systems 10 lokalisiert. Beispielsweise liefert die Fehleranalyse des technischen Systems 10 auf Basis eines aufgetretenen spezifischen Defekts das Ergebnis, dass eine ganz bestimmte technische Komponente 1 des technischen Systems 10 für diesen Defekt des technischen Systems 10 ursächlich ist, deren exakter Typ bzw. Identifizierungsdaten ID nicht direkt bekannt sind.

Bei dem Schritt 2.II werden deshalb Bilddaten BD von der lokalisierten auszutauschenden Komponente 1 durch das mobile elektronische Endgerät 2 aufgenommen, um Informationen für eine exakte Identifizierung der auszutauschen Komponente 1 zu erhalten.

Bei dem Schritt 2.III erfolgt dann ein automatisiertes Identifizieren der auszutauschenden Komponente 1 auf Basis der Bilddaten BD und auf Basis von Ersatzteildaten ED einer elektronischen Ersatzteildatenbank 3. Die Ersatzteildatenbank 3 umfasst folgende Ersatzteildaten: hierzu stellt sie anschaulich erläutert einen elektronischen Ersatzteilkatalog dar, in dem alle Ersatzteile 1' für das technische System 10 aufgeführt und bildlich dargestellt sind und im Detail erläutert sind. Weiterhin sind in der Ersatzteildatenbank 3 auch Identifizierungsdaten ID der Ersatzteile 1', wie zum Beispiel ein spezifischer Identifizierungscode IC, dargestellt. Wird ein Ersatzteil 1' gefunden, das exakt der in den Bilddaten BD dargestellten auszutauschenden Komponente 1 entspricht, so wird diese auszutauschenden Komponente 1 mit diesem spezifischen Ersatzteil 1' identifiziert.

Bei dem Schritt 2.IV erfolgt schließlich ein automatisiertes Identifizieren des benötigten Ersatzteils 1' auf Basis der identifizierten auszutauschenden Komponente 1 und der Ersatzteildaten ED. In der Regel haben das benötigte Ersatzteil 1' und die identifizierte auszutauschende Komponente 1 einen identischen Typ. Es kann aber auch sein, dass in der Ersatzteildatenbank 3 ein neueres geeigneteres Ersatzteil 1' aufgeführt wird, welches im Vergleich zu der identifizierten Komponente 1 günstigere technische Eigenschaften aufweist und mit der identifizierten Komponente 1 austauschbar ist. In einem solchen Fall wird dann eine Bestellung dieses besonders geeigneten Ersatzteils 1' empfohlen.

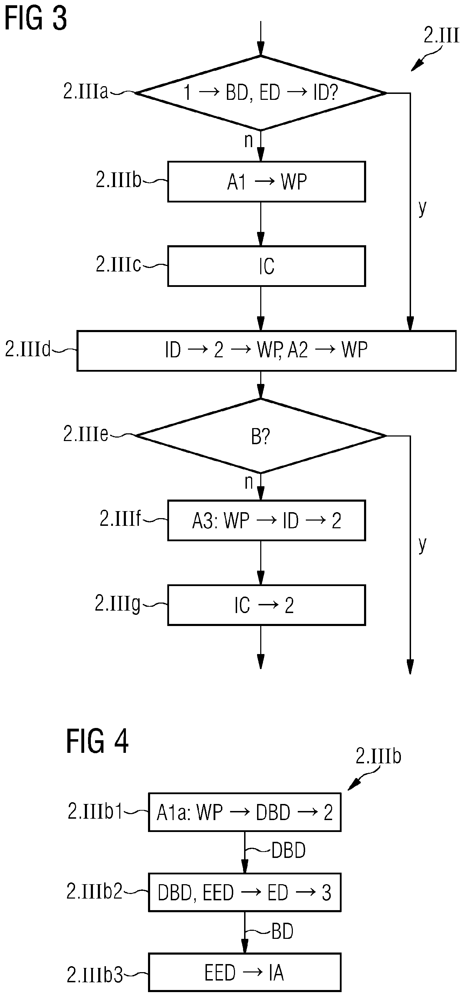

In FIG 3 ist ein Flussdiagramm gezeigt, welches den Schritt 2.III des in FIG 2 veranschaulichten Verfahrens zum automatisierten Identifizieren eines benötigten Ersatzteils 1' eines technischen Systems 10 im Detail veranschaulicht.

Bei dem Teilschritt 2.IIIa wird zunächst ermittelt, ob die auszutauschende Komponente 1 eindeutig identifizierbar ist. Diese Ermittlung erfolgt auf Basis eines Vergleichs der mit dem mobilen elektronischen Endgerät 2 erfassten Bilddaten BD mit Ersatzteildaten ED der elektronischen Ersatzteildatenbank 3. Beispielsweise enthalten die Bilddaten BD strukturelle Merkmale, welche zur eindeutigen Identifizierung der auszutauschende Komponente 1 genutzt werden können. In der elektronischen Ersatzteildatenbank 3 sind zu den einzelnen Typenbezeichnungen auch Bilder gespeichert, die mit den erfassten Bilddaten BD verglichen werden können, um die auszutauschende Komponente 1 zu identifizieren. Es können zudem in den Bilddaten BD vorhandene Identifizierungscodes IC, oder allgemeiner formuliert, in den Bilddaten BD vorhandene Identifizierungsdaten ID, automatisiert oder mit Hilfe einer Bedienperson des mobilen elektronischen Endgeräts 2 segmentiert und erkannt werden. In einem solchen Fall müssen diese Identifizierungsdaten ID nur noch mit den in der elektronischen Ersatzteildatenbank 3 vorhandenen Identifizierungsdaten ID verglichen werden, um eine auszutauschende Komponente 1 exakt zu identifizieren.

Für den Fall, dass die auszutauschende Komponente 1 nicht eindeutig identifizierbar ist, was in FIG 3 mit "n" gekennzeichnet ist, wird bei dem Teilschritt 2.IIIb eine spezifische Aufforderung A1 an eine Wartungsperson WP übermittelt, d. h., es wird eine solche Aufforderung A1 auf der Anzeigeeinheit 2b des mobilen elektronischen Endgeräts 2 der Wartungsperson WP angezeigt, wobei zu einer geeigneten Interaktion mit dem mobilen elektronischen Endgerät 2 auf Basis der Bilddaten BD und der Ersatzteildaten ED der elektronischen Ersatzteildatenbank aufgefordert wird, um eindeutige Identifizierungsdaten ID für die auszutauschende Komponente 1 zu erhalten.

Bei dem Schritt 2.IIIc wird ein Identifizierungscode IC von der Wartungsperson WP in das mobile elektronische Endgerät 2 eingegeben.

Bei dem Schritt 2.IIId erfolgt darauf eine Präsentation von vorläufigen Identifizierungsdaten ID der identifizierten auszutauschenden Komponente 1 auf der Anzeigeeinheit 2b des mobilen Endgeräts 2 der Wartungsperson WP. Die Identifizierungsdaten ID können neben dem von der Wartungsperson WP eingegebenen Identifizierungscode IC auch weitere Informationen, wie zum Beispiel eine namentliche Bezeichnung der auszutauschenden Komponente 1 sowie Bilddaten BD, welche die auszutauschende Komponente 1 abbilden, umfassen. Weiterhin erfolgt bei dem Schritt 2.IIId eine Aufforderung A2 zu einer Eingabe einer Bestätigung einer korrekten Identifizierung der auszutauschenden Komponente 1 durch die Wartungsperson WP. Die Aufforderung A2 wird der Wartungsperson WP auf der Anzeigeeinheit 2b des mobilen Endgerätes 2 der Wartungsperson WP angezeigt.

Bei dem Schritt 2.IIIe wird geprüft, ob durch die Wartungsperson WP eine Bestätigung B, dass die automatisierte Identifizierung korrekt ist, erfolgt ist, d. h. insbesondere, ob eine entsprechende Eingabe in das mobile elektronische Endgerät 2 erfolgt ist.

Für den Fall, dass keine Bestätigung B eingegeben wurde, dass eine eindeutige und korrekte automatisierte Identifizierung der auszutauschenden Komponente 1 erfolgt ist, was in FIG 3 mit "n" gekennzeichnet ist, wird zu dem Schritt 2.IIIf übergegangen, bei dem die Wartungsperson WP mit einer dritten Aufforderungsnachricht A3 automatisiert dazu aufgefordert wird, auf Basis der Ersatzteildaten ED der elektronischen Ersatzteildatenbank 3 die Identifizierung durch manuelle Identifizierung und Auswahl der auszutauschen Komponente 1 in der elektronischen Ersatzteildatenbank 3 selbst vorzunehmen, und bei dem die Ersatzteildaten ED der elektronischen Ersatzteildatenbank 3 der Wartungsperson WP für diesen Zweck auf der Anzeigeeinheit 2b angezeigt werden. Die Ersatzteildaten 3 können insbesondere Bilddaten, schriftliche Informationen und vor allem auch Identifizierungsdaten ID der Ersatzteile 1' umfassen.

Bei dem Schritt 2.IIIg gibt die Wartungsperson WP, nachdem sie die auszutauschende Komponente 1 in der Ersatzteildatenbank 3 gefunden und ausgewählt hat, einen dort zu findenden Identifizierungscode IC der auszutauschenden Komponente 1 in ihr mobiles elektronisches Endgerät 2 ein, um so den Identifizierungsprozess abzuschließen.

In FIG 4 ist eine schematische Darstellung des in FIG 3 dargestellten Schritts 2.IIIb im Detail gezeigt. Bei einem ersten Teilschritt 2.IIIb1 des Schritts 2.IIIb wird an die Wartungsperson WP eine Aufforderungsnachricht A1a automatisiert übermittelt, detaillierte Bilddaten DBD aus unterschiedlichen Perspektiven von der auszutauschenden Komponente 1 mit dem mobilen Endgerät 2 zu erfassen.

Bei dem Teilschritt 2.IIIb2 werden ergänzte Ersatzteildaten EED automatisiert generiert, wobei die detaillierten Bilddaten DBD mit den Ersatzteildaten ED der manuell identifizierten und ausgewählten auszutauschenden Komponente 1 in der elektronischen Ersatzteildatenbank 3 verknüpft werden.

Bei dem Teilschritt 2.IIIb3 erfolgt ein automatisiertes Training der automatisierten Identifizierung auf Basis der ergänzten Ersatzteildaten EED der elektronischen Ersatzteildatenbank 3. Da die ergänzten Ersatzteildaten EED zusätzliche Bildinformation umfassen, mit denen der automatisierte Identifizierungsalgorithmus IA, welcher auf einem künstlichen neuronalen Netzwerk basiert, trainiert wird, erhöht sich nach dem Training die Wahrscheinlichkeit, dass die bisher noch nicht automatisch identifizierbare auszutauschende Komponente bei der nächsten Gelegenheit automatisch identifizierbar ist.

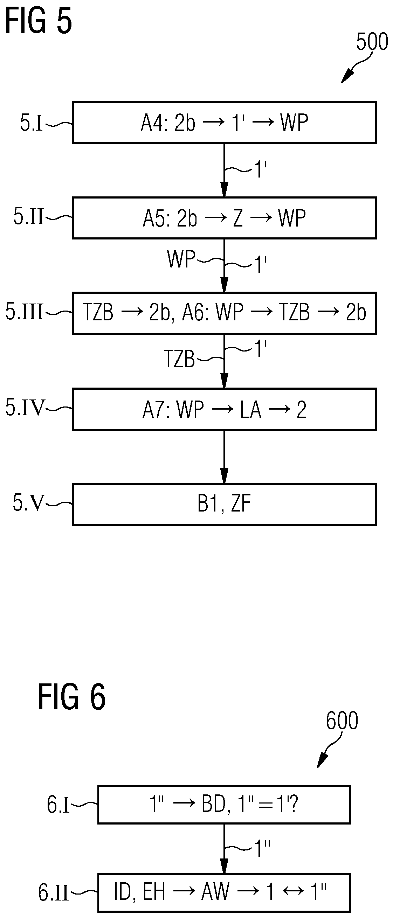

In FIG 5 ist ein Flussdiagramm 500 dargestellt, welches zusätzliche Schritte des in FIG 2 bis FIG 4 gezeigten Verfahrens zum automatisierten Identifizieren eines benötigten Ersatzteils 1' eines technischen Systems 10, die sich an die in FIG 2 gezeigten Schritt 2.I bis 2.IV anschließen können, veranschaulicht.

Bei dem Schritt 5.I wird eine Aufforderung A4 zum Bestellen eines passenden Ersatzteils 1' für die identifizierte auszutauschende Komponente 1 der Wartungsperson WP auf der Anzeigeeinheit 2b des mobilen elektronischen Endgeräts 2 automatisiert angezeigt.

Bei dem Schritt 5.II wird nach Entgegennahme eine Eingabe zur Bestellung des passenden Ersatzteils 1' eine Aufforderung A5 zur Eingabe der Anzahl Z der zu bestellenden Ersatzteile 1' auf der Anzeigeeinheit 2b des mobilen elektronischen Endgeräts 2 angezeigt und es erfolgt eine Entgegennahme der Eingabe der Wartungsperson WP zur Bestellung des passenden Ersatzteils 1'.

Bei dem Schritt 5.III wird der Wartungsperson WP technisches Zubehör TZB zu der identifizierten auszutauschenden Komponente 1 angezeigt und es wird eine Aufforderung A6 zur Auswahl und Bestellung des technischen Zubehörs TZB angezeigt.

Bei dem Schritt 5.IV wird auf dem mobilen elektronischen Endgerät 2 eine Aufforderung A7 zur Eingabe einer Lieferadresse LA für die bestellten Ersatzteile 1' und das bestellte Zubehör TZB angezeigt.

Bei dem Schritt 5.V wird auf der Anzeigeeinheit 2b des mobilen elektronischen Endgeräts 2 der Wartungsperson WP eine Mitteilung mit einer Bestätigung B1 und einer Zusammenfassung ZF der Bestellung angezeigt.

In FIG 6 ist ein Flussdiagramm 600 gezeigt, welches weitere Schritte des in FIG 2 bis FIG 5 gezeigten Verfahrens zum automatisierten Identifizieren eines benötigten Ersatzteils 1' eines technischen Systems 10, die sich an die in FIG 2 bis FIG 5 veranschaulichten Schritte und Teilschritte anschließen können, veranschaulicht.

Bei dem Schritt 6.I werden nach der Lieferung eines Ersatzteils 1" Bilddaten BD von dem gelieferten Ersatzteil 1" aufgenommen und es wird auf Basis der Bilddaten BD und der Ersatzteildaten ED der elektronischen Ersatzteildatenbank 3 geprüft, ob das gelieferte Ersatzteil 1" mit dem vor der Bestellung identifizierten Ersatzteil 1' übereinstimmt.

Bei dem Schritt 6.II werden für den Fall, dass bei dem Schritt 6.I ermittelt wurde, dass das korrekte Ersatzteil geliefert wurde, nach Lieferung des Ersatzteils 1" auf Basis der Identifizierungsdaten ID des gelieferten Ersatzteils 1" und auf Basis eines elektronischen Wartungshandbuchs EH der Wartungsperson WP Anweisungen AW für einen Austausch der identifizierten auszutauschenden Komponente 1 durch das gelieferte Ersatzteil 1" angezeigt.

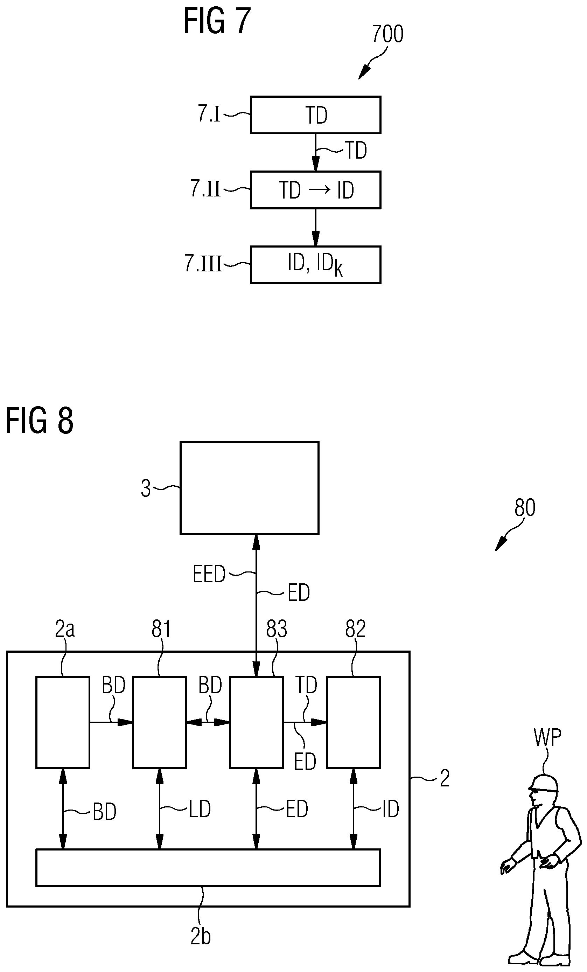

In FIG 7 ist ein Flussdiagramm 700 gezeigt, welches ein Verfahren zum Trainieren eines Verfahrens zum automatisierten Identifizieren eines benötigten Ersatzteils 1' eines technischen Systems 10 veranschaulicht.

Bei dem Schritt 7.I werden zunächst gelabelte Trainingsdaten TD generiert. Die gelabelten Trainingsdaten TD umfassen bereits die von dem automatisierten Verfahren zum automatisierten Identifizieren eines benötigten Ersatzteils 1' eines technischen Systems 10 zu ermittelnden Ergebnisdaten und eignen sich daher für ein überwachtes Trainingsverfahren, bei dem Abweichungen der Ergebnisdaten des automatisierten Verfahrens von den tatsächlichen Ergebnisdaten für eine Anpassung des dem automatisierten Identifizierungsverfahren zugrundeliegenden Modells, insbesondere ein künstliches neuronales Netzwerk, verwendet werden können.

Für die Erzeugung der gelabelten Trainingsdaten TD werden Ersatzteildaten ED einer Ersatzteildatenbank 3 von technischen Komponenten 1 eines technischen Systems 10 ermittelt. Weiterhin werden durch ein mobiles Endgerät 2 Bilddaten BD der technischen Komponenten 1 des technischen Systems 10 erfasst und mit den Ersatzteildaten ED verknüpft. Zudem werden korrekte Identifizierungsdaten ID der technischen Komponenten 1 mit den erfassten Bilddaten BD verknüpft. Zur Generierung der gelabelten Trainingsdaten TD werden die Bilddaten BD von den technischen Komponenten 1 im in dem technischen System 10 eingebauten Zustand aufgenommen und auch aus unterschiedlichen Sichtwinkeln aufgenommen.

Bei dem Schritt 7.II wird ein automatisiertes Identifizieren eines Ersatzteils 1' auf Basis der erfassten Bilddaten BD und der übrigen Ersatzteildaten ED durchgeführt. Beispielsweise werden als gelabelte Trainingsdaten TD Bilddaten BD mit Identifizierungsdaten ID als Eingangsdaten für das Trainingsverfahren genutzt und die Identifizierung erfolgt auf Basis der Bilddaten BD und der Ersatzteildaten ED, wobei die Ersatzteildaten ED zum Beispiel zusätzliche Informationen hinsichtlich der Eigenschaften der auf den Bilddaten BD dargestellten Komponenten liefern können und diese Eigenschaften auch mit Identifizierungsdaten verknüpfen.

Bei dem Schritt 7.III erfolgt ein Anpassen des automatisierten Verfahrens auf Basis der automatisiert ermittelten Identifizierungsdaten ID und der korrekten Identifizierungsdaten IDₖ der gelabelten Trainingsdaten TD. Ein solcher Prozess wird auch als überwachtes Training bezeichnet.

Die Schritte 7.II und 7.III werden wiederholt, bis ein Qualitätskriterium für die Ergebnisdaten bzw. Identifizierungsdaten ID des Verfahrens zum automatisierten Identifizieren eines benötigten Ersatzteils 1' eines technischen Systems 10 erfüllt ist.

In FIG 8 ist ein Identifizierungssystem 80 gemäß einem Ausführungsbeispiel der Erfindung veranschaulicht. Das in FIG 8 gezeigte Identifizierungssystem 80 umfasst eine Ersatzteildatenbank 3, welche Ersatzteildaten ED zu einer Mehrzahl von Ersatzteilen 1' von technischen Systemen 10 abspeichert.

Teil des Identifizierungssystems 80 ist außerdem ein mobiles elektronisches Endgerät 2, beispielsweise ein Smartphone, welches eine Bildaufnahmeeinheit 2a zum Aufnehmen von Bilddaten BD einer auszutauschenden Komponente 1 (in FIG 8 nicht gezeigt) aufweist. Teil des mobilen elektronischen Endgeräts 2 ist auch eine Lokalisierungseinheit 81 zum Lokalisieren einer auszutauschenden Komponente 1 eines technischen Systems 10 auf Basis einer vorab durchgeführten Fehleranalyse des technischen Systems 10. Beispielsweise gibt eine Wartungsperson WP Informationen über einen spezifischen Defekt des technischen Systems 10 in das mobile elektronische Endgerät 2 ein und die Lokalisierungseinheit 81 lokalisiert auf Basis dieser Informationen einen Bereich in dem technischen System 10, in dem sich die auszutauschende Komponente 1 befindet. Im einfachsten Fall wird der Bereich einfach selbst von der Wartungsperson WP lokalisiert.

Teil des mobilen elektronischen Endgeräts 2 ist auch eine Identifizierungseinheit 82, welche zum automatisierten Identifizieren der auszutauschenden Komponente 1 auf Basis von Bilddaten BD, welche von dem lokalisierten Bereich durch die Bildaufnahmeeinheit 2a aufgenommen wurden, und auf Basis von Ersatzteildaten ED der elektronischen Ersatzteildatenbank 3 eingerichtet ist und außerdem zum automatischen Identifizieren des benötigten Ersatzteils 1' auf Basis der identifizierten auszutauschenden Komponente 1 und der Ersatzteildaten ED eingerichtet ist.

Die von der Identifizierungseinheit 82 ermittelten Identifizierungsdaten ID werden auf einer Anzeigeeinheit 2b des mobilen elektronischen Endgeräts 2 angezeigt.

Teil des Identifizierungssystems 80 ist auch eine Datengenerierungseinheit 83 zum Generieren von ergänzten Ersatzteildaten EED durch eine Kombination von neu erfassten Bilddaten BD von auszutauschenden Komponenten 1 und gelieferten Ersatzteilen 1" mit bereits in der Ersatzteildatenbank 3 vorhandenen Ersatzteildaten ED und Eingaben einer Wartungsperson WP. Die Datengenerierungseinheit 83 ist auch dazu eingerichtet, gelabelte Trainingsdaten TD auf Basis ergänzter Ersatzteildaten EED zu erzeugen und sie der Identifizierungseinheit 82 für ein Training zu übermitteln. Die in FIG 8 dargestellte Datengenerierungseinheit 83 dient im "Normalbetrieb" auch als Schnittstelle zur Übermittlung von Ersatzteildaten ED und Bilddaten BD an die Identifizierungseinheit 82 und zum Entgegennehmen von Eingaben einer Wartungsperson WP über die Anzeigeeinheit 2b.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum automatisierten Identifizieren eines benötigten Ersatzteils (1') eines technischen Systems (10), aufweisend die Schritte:
- Lokalisieren einer auszutauschenden Komponente (1) des technischen Systems (10) auf Basis einer vorab durchgeführten Fehleranalyse des technischen Systems (10) durch ein mobiles elektronisches Endgerät (2) einer Wartungsperson (WP), welches eine Bildaufnahmeeinheit (2a) zur optischen Erfassung von Bilddaten (BD) aufweist,
- Aufnehmen von Bilddaten (BD) von der lokalisierten auszutauschenden Komponente (1) durch das mobile elektronische Endgerät (2),
- automatisiertes Identifizieren der auszutauschenden Komponente (1) auf Basis der Bilddaten (BD) und auf Basis von Ersatzteildaten (ED) einer elektronischen Ersatzteildatenbank (3), wobei das Identifizieren der auszutauschenden Komponente (1) durch Anwendung eines KI-basierten Algorithmus erfolgt,
- automatisiertes Identifizieren des benötigten Ersatzteils (1') auf Basis der identifizierten auszutauschenden Komponente (1) und der Ersatzteildaten (ED), wobei der Schritt des automatisierten Identifizierens der auszutauschenden Komponente (1) die Teilschritte umfasst:
- Ermitteln, ob die auszutauschende Komponente (1) eindeutig identifizierbar ist, auf Basis eines Vergleichs der Bilddaten (BD) mit den Ersatzteildaten (ED) der elektronischen Ersatzteildatenbank (3),
- für den Fall, dass die auszutauschende Komponente (1) nicht eindeutig identifizierbar ist, Ermitteln einer spezifischen Aufforderung (A1) an eine Wartungsperson (WP) zu einer geeigneten Interaktion mit dem mobilen elektronischen Endgerät (2) zur Identifizierung der auszutauschenden Komponente (1) auf Basis der Bilddaten (BD) und der Ersatzteildaten (ED) der elektronischen Ersatzteildatenbank (3), wobei die spezifische Aufforderung (A1)eine automatisierte Aufforderung zum Markieren und/oder Segmentieren von in den Bilddaten (BD) dargestellten Identifizierungscodes (IC) der auszutauschenden Komponente (1) aufweist.

2. Verfahren nach Anspruch 1, wobei die spezifische Aufforderung (A1) eine Aufforderung zu einer der folgenden spezifischen Interaktionen aufweist:
- für den Fall, dass von der Wartungsperson (WP) keine Markierung und/oder Segmentierung vorgenommen wurde, eine automatisierte Aufforderung zur Eingabe eines Identifizierungscodes (IC) der auszutauschenden Komponente (1),
- für den Fall, dass es sich bei der auszutauschenden Komponente (1) um eine elektrische oder pneumatische Komponente handelt, eine automatisierte Aufforderung zur Eingabe einer Komponentenbezeichnung auf Basis eines angezeigten elektrischen oder pneumatischen Schaltplans des technischen Systems (10) durch die Wartungsperson (WP).

3. Verfahren nach einem der vorstehenden Ansprüche, wobei das automatisierte Identifizieren der auszutauschenden Komponente (1) auf Basis der Bilddaten (BD) umfasst:
- eine Präsentation von vorläufigen Identifizierungsdaten (ID) der identifizierten auszutauschenden Komponente (1) auf dem mobilen Endgerät (2) der Wartungsperson (WP) und
- eine Aufforderung (A2) zu einer Eingabe einer Bestätigung (B) einer korrekten Identifizierung der auszutauschenden Komponente (1) durch die Wartungsperson (WP).

4. Verfahren nach einem der vorstehenden Ansprüche, wobei für den Fall, dass keine eindeutige oder keine korrekte automatisierte Identifizierung der auszutauschenden Komponente (1) erfolgt ist, die Wartungsperson (WP) automatisiert dazu aufgefordert wird, auf Basis der Ersatzteildaten (ED) der elektronischen Ersatzteildatenbank (3) die Identifizierung der auszutauschenden Komponente (1) durch Identifizierung und Auswahl der auszutauschen Komponente (1) in der elektronischen Ersatzteildatenbank (3) manuell vorzunehmen und die Ersatzteildaten (ED) der elektronischen Ersatzteildatenbank (3) der Wartungsperson (WP) angezeigt werden.

5. Verfahren nach Anspruch 4, wobei für den Fall, dass keine eindeutige oder keine korrekte automatisierte Identifizierung erfolgt ist,
- an die Wartungsperson (WP) eine Aufforderungsnachricht (A1a) automatisiert übermittelt wird, detaillierte Bilddaten (DBD) aus unterschiedlichen Perspektiven von der auszutauschenden Komponente (1) mit dem mobilen Endgerät (2) zu erfassen,
- ergänzte Ersatzteildaten (EED) automatisiert generiert werden, wobei die detaillierten Bilddaten (DBD) und die Informationen über die manuell identifizierte und ausgewählte auszutauschende Komponente (1) den Ersatzteildaten (ED) der elektronischen Ersatzteildatenbank (3) hinzugefügt werden und
- ein automatisiertes Training der automatisierten Identifizierung auf Basis der ergänzten Ersatzteildaten (EED) der elektronischen Ersatzteildatenbank (3) durchgeführt wird.

6. Verfahren nach einem der vorstehenden Ansprüche, wobei nach erfolgter Identifizierung der auszutauschenden Komponente (1) mindestens einer der folgenden automatisierten Zusatzschritte für einen Austauschprozess der identifizierten auszutauschenden Komponente (1) vorgenommen wird:
- Anzeigen einer Aufforderung zum Bestellen eines passenden Ersatzteils (1') für die identifizierte auszutauschende Komponente (1) und Entgegennahme einer Eingabe der Wartungsperson (WP) zur Bestellung des passenden Ersatzteils (1'),
- Anzeigen einer Aufforderung zur Eingabe der Anzahl (Z) der zu bestellenden Ersatzteile (1') und Entgegennahme der Eingabe der Anzahl (Z) von der Wartungsperson (WP),
- Anzeigen von empfohlenen Werkzeugen und/oder von empfohlenem technischem Zubehör zu der identifizierten auszutauschenden Komponente (1) und Anzeigen einer Aufforderung zur Auswahl und Bestellung des technischen Zubehörs und Entgegennahme einer Eingabe der Auswahl und Bestellung der Wartungsperson (WP),
- Anzeigen einer Aufforderung zur Eingabe einer Lieferadresse (LA) für die bestellten Ersatzteile (1') und das bestellte Zubehör und Entgegennahme einer Eingabe einer Lieferadresse (LA) von der Wartungsperson (WP),
- Anzeigen einer Mitteilung mit einer Bestätigung (B1) und Zusammenfassung (ZF) der Bestellung.

7. Verfahren nach einem der vorstehenden Ansprüche, wobei nach Lieferung eines Ersatzteils (1") Bilddaten (BD) von dem gelieferten Ersatzteil (1") aufgenommen werden und auf Basis der Bilddaten (BD) und der Ersatzteildaten (ED) der elektronischen Ersatzteildatenbank (3) geprüft wird, ob das gelieferte Ersatzteil (1") mit dem identifizierten Ersatzteil (1') übereinstimmt.

8. Verfahren nach einem der vorstehenden Ansprüche, wobei nach Lieferung eines Ersatzteils (1") auf Basis der Identifizierungsdaten des gelieferten Ersatzteils (1") und auf Basis eines elektronischen Wartungshandbuchs (EH) der Wartungsperson (WP) Anweisungen (AW) für einen Austausch der identifizierten auszutauschenden Komponente (1) durch das gelieferte Ersatzteil (1") angezeigt werden.

9. Verfahren zum Trainieren des Schritts zum automatisierten Identifizieren der auszutauschenden Komponente auf Basis der Bilddaten und auf Basis von Ersatzteildaten einer elektronischen Ersatzteildatenbank des Verfahrens zum automatisierten Identifizieren eines benötigten Ersatzteils (1') eines technischen Systems (10) nach einem der Ansprüche 1 bis 8:
- Generieren von gelabelten Trainingsdaten (TD), welche umfassen:
- Ersatzteildaten (ED) einer Ersatzteildatenbank (3) von technischen Komponenten (1) eines technischen Systems (10),
- durch ein mobiles Endgerät (2) erfasste Bilddaten (BD) der technischen Komponenten (1) des technischen Systems (10),
- korrekte Identifizierungsdaten (IDₖ) von technischen Komponenten (1) zu den erfassten Bilddaten (BD),
- Durchführen des automatisierten Identifizierens eines Ersatzteils (1') auf Basis der erfassten Bilddaten (BD), wobei Identifizierungsdaten (ID) für technische Komponenten (1) ermittelt werden,
- Anpassen des automatisierten Verfahrens auf Basis der automatisiert ermittelten Identifizierungsdaten (ID) und der korrekten Identifizierungsdaten (IDₖ) der technischen Komponenten (1) der zugeordneten Ersatzteile (1').

10. Verfahren nach Anspruch 9, wobei zur Generierung der gelabelten Trainingsdaten (TD) die Bilddaten (BD) von den technischen Komponenten (1) in einem Zustand, in dem die technischen Komponenten (1) in dem technischen System (10) eingebaut sind, aufgenommen werden und/oder aus unterschiedlichen Sichtwinkeln aufgenommen werden.

11. Identifizierungssystem (80), aufweisend:
- eine Lokalisierungseinheit (81) zum Lokalisieren einer auszutauschenden Komponente (1) eines technischen Systems (10) auf Basis einer vorab durchgeführten Fehleranalyse des technischen Systems (10),
- eine Bildaufnahmeeinheit (2a) zum Aufnehmen von Bilddaten (BD) von der lokalisierten auszutauschenden Komponente (1),
- eine elektronische Ersatzteildatenbank (3), welche Ersatzteildaten (ED) bezüglich austauschbarer Komponenten (1) eines technischen Systems (10) umfasst,
- eine Identifizierungseinheit (82) zum automatisierten Identifizieren der auszutauschenden Komponente (1) auf Basis der Bilddaten (BD) und auf Basis von Ersatzteildaten (ED) der elektronischen Ersatzteildatenbank (3) und zum automatischen Identifizieren des benötigten Ersatzteils (1') auf Basis der identifizierten auszutauschenden Komponente (1) und der Ersatzteildaten (ED), wobei das Identifizieren der auszutauschenden Komponente (1) durch Anwendung eines KI-basierten Algorithmus erfolgt und wobei der Schritt des automatisierten Identifizierens der auszutauschenden Komponente (1) die Teilschritte umfasst:
- Ermitteln, ob die auszutauschende Komponente (1) eindeutig identifizierbar ist, auf Basis eines Vergleichs der Bilddaten (BD) mit den Ersatzteildaten (ED) der elektronischen Ersatzteildatenbank (3),
- für den Fall, dass die auszutauschende Komponente (1) nicht eindeutig identifizierbar ist, Ermitteln einer spezifischen Aufforderung (A1) an eine Wartungsperson (WP) zu einer geeigneten Interaktion mit dem mobilen elektronischen Endgerät (2) zur Identifizierung der auszutauschenden Komponente (1) auf Basis der Bilddaten (BD) und der Ersatzteildaten (ED) der elektronischen Ersatzteildatenbank (3), wobei die spezifische Aufforderung (A1)eine automatisierte Aufforderung zum Markieren und/oder Segmentieren von in den Bilddaten (BD) dargestellten Identifizierungscodes (IC) der auszutauschenden Komponente (1) aufweist.

12. Computerprogrammprodukt mit einem Computerprogramm, welches direkt in eine Speichereinheit eines Rechensystems ladbar ist, mit Programmabschnitten, um ein Verfahren nach einem der Ansprüche 1 bis 10 auszuführen, wenn das Computerprogramm in dem Rechensystem ausgeführt wird.

13. Computerlesbares Medium, auf welchem von einer Rechnereinheit ausführbare Programmabschnitte gespeichert sind, um ein Verfahren nach einem der Ansprüche 1 bis 10 auszuführen, wenn die Programmabschnitte von der Rechnereinheit ausgeführt werden.

## Claims

1. Method for automated identification of a required replacement part (1') for a technical system (10), comprising the steps of:
- locating a component (1) to be replaced of the technical system (10) on the basis of a previously performed fault analysis of the technical system (10) by way of a mobile electronic terminal (2) of a maintenance person (WP), which comprises an image capture unit (2a) for optically acquiring image data (BD),
- capturing image data (BD) from the located component (1) to be replaced by way of the mobile electronic terminal (2),
- automated identification of the component (1) to be replaced on the basis of the image data (BD) and on the basis of replacement part data (ED) of an electronic replacement parts database (3), wherein the component (1) to be replaced is identified by applying an AI-based algorithm,
- automated identification of the required replacement part (1') on the basis of the identified component (1) to be replaced and the replacement part data (ED), wherein the step of automated identification of the component (1) to be replaced comprises the substeps of:
- determining whether the component (1) to be replaced is uniquely identifiable, on the basis of a comparison of the image data (BD) with the replacement part data (ED) of the electronic replacement parts database (3),
- if the component (1) to be replaced is not uniquely identifiable, determining a specific prompt (A1) to a maintenance person (WP) for appropriate interaction with the mobile electronic terminal (2) to identify the component (1) to be replaced on the basis of the image data (BD) and the replacement part data (ED) of the electronic replacement parts database (3), wherein the specific prompt (A1) comprises an automated prompt to mark and/or segment identification codes (IC) relating to the component (1) to be replaced that are shown in the image data (BD),

2. Method according to Claim 1, wherein the specific prompt (A1) comprises a prompt to perform one of the following specific interactions:
- if the maintenance person (WP) has not carried out marking and/or segmentation, an automated prompt to input an identification code (IC) relating to the component (1) to be replaced,
- if the component (1) to be replaced is an electric or pneumatic component, an automated prompt for the maintenance person (WP) to input a component name on the basis of a displayed electrical or pneumatic circuit diagram of the technical system (10).

3. Method according to one of the preceding claims, wherein automated identification of the component (1) to be replaced on the basis of the image data (BD) comprises:
- presenting provisional identification data (ID) relating to the identified component (1) to be replaced on the mobile terminal (2) of the maintenance person (WP), and
- a prompt (A2) for the maintenance person (WP) to input confirmation (B) of correct identification of the component (1) to be replaced.

4. Method according to one of the preceding claims, wherein if unique or correct automated identification of the component (1) to be replaced has not occurred, an automated process prompts the maintenance person (WP) to take the replacement part data (ED) of the electronic replacement parts database (3) as a basis for manually performing the identification of the component (1) to be replaced by identifying and selecting the component (1) to be replaced in the electronic replacement parts database (3), and the replacement part data (ED) of the electronic replacement parts database (3) are displayed to the maintenance person (WP).

5. Method according to Claim 4, wherein if unique or correct automated identification has not occurred,
- an automated process transmits to the maintenance person (WP) a prompt message (A1a) asking them to use the mobile terminal (2) to acquire detailed image data (DBD) from different perspectives from the component (1) to be replaced,
- an automated process generates enhanced replacement part data (EED), the detailed image data (DBD) and the information about the manually identified and selected component (1) to be replaced being added to the replacement part data (ED) of the electronic replacement parts database (3), and
- automated training of the automated identification is carried out on the basis of the enhanced replacement part data (EED) of the electronic replacement parts database (3).

6. Method according to one of the preceding claims, wherein after the component (1) to be replaced has been identified, at least one of the following automated additional steps for a replacement process for the identified component (1) to be replaced is performed:
- displaying a prompt to order a suitable replacement part (1') for the identified component (1) to be replaced and accepting an input from the maintenance person (WP) to order the suitable replacement part (1'),
- displaying a prompt to input the number (Z) of replacement parts (1') to be ordered and accepting the input of the number (Z) from the maintenance person (WP),
- displaying recommended tools and/or recommended technical accessories concerning the identified component (1) to be replaced and displaying a prompt to select and order the technical accessories and accepting an input of the selection and order from the maintenance person (WP),
- displaying a prompt to input a delivery address (LA) for the ordered replacement parts (1') and the ordered accessories and accepting an input of a delivery address (LA) from the maintenance person (WP),
- displaying a message containing a confirmation (B1) and summary (ZF) of the order.

7. Method according to one of the preceding claims, wherein after a replacement part (1") has been delivered, image data (BD) are captured from the delivered replacement part (1") and the image data (BD) and the replacement part data (ED) of the electronic replacement parts database (3) are taken as a basis for checking whether the delivered replacement part (1") matches the identified replacement part (1').

8. Method according to one of the preceding claims, wherein after a replacement part (1") has been delivered, the identification data relating to the delivered replacement part (1") and an electronic maintenance manual (EH) are taken as a basis for displaying instructions (AW) for replacing the identified component (1) to be replaced with the delivered replacement part (1") to the maintenance person (WP).

9. Method for training the step for automated identification of the component to be replaced on the basis of the image data and on the basis of replacement part data of an electronic replacement parts database of the method for automated identification of a required replacement part (1') for a technical system (10) according to one of Claims 1 to 8:
- generating labelled training data (TD), which include:
- replacement part data (ED) of a replacement parts database (3) for technical components (1) of a technical system (10),
- image data (BD) relating to the technical components (1) of the technical system (10), acquired by a mobile terminal (2),
- correct identification data (IDₖ) for technical components (1) concerning the acquired image data (BD),
- performing automated identification of a replacement part (1') on the basis of the acquired image data (BD), identification data (ID) being determined for technical components (1),
- tailoring the automated method on the basis of the identification data (ID) determined by an automated process and the correct identification data (IDₖ) relating to the technical components (1) of the associated replacement parts (1').

10. Method according to Claim 9, wherein the labelled training data (TD) are generated by capturing the image data (BD) from the technical components (1) in a state in which the technical components (1) are installed in the technical system (10) and/or by capturing said image data from different viewing angles.

11. Identification system (80), comprising:
- a locating unit (81) for locating a component (1) to be replaced of a technical system (10) on the basis of a previously performed fault analysis of the technical system (10),
- an image capture unit (2a) for capturing image data (BD) from the located component (1) to be replaced,
- an electronic replacement parts database (3) that includes replacement part data (ED) about replaceable components (1) of a technical system (10),
- an identification unit (82) for automated identification of the component (1) to be replaced on the basis of the image data (BD) and on the basis of replacement part data (ED) of the electronic replacement parts database (3) and for automatically identifying the required replacement part (1') on the basis of the identified component (1) to be replaced and the replacement part data (ED), wherein the component (1) to be replaced is identified by applying an AI-based algorithm, and wherein the step of automated identification of the component (1) to be replaced comprises the substeps of:
- determining whether the component (1) to be replaced is uniquely identifiable, on the basis of a comparison of the image data (BD) with the replacement part data (ED) of the electronic replacement parts database (3),
- if the component (1) to be replaced is not uniquely identifiable, determining a specific prompt (A1) to a maintenance person (WP) for appropriate interaction with the mobile electronic terminal (2) to identify the component (1) to be replaced on the basis of the image data (BD) and the replacement part data (ED) of the electronic replacement parts database (3), wherein the specific prompt (A1) comprises an automated prompt to mark and/or segment identification codes (IC) relating to the component (1) to be replaced that are shown in the image data (BD),

12. Computer program product comprising a computer program that can be loaded directly into a memory unit of a computing system, having program sections to carry out a method according to one of Claims 1 to 10 when the computer program is executed in the computing system.

13. Computer-readable medium storing program sections that can be executed by a computer unit in order to carry out a method according to one of Claims 1 to 10 when the program sections are executed by the computer unit.

## Revendications

1. Procédé pour l'identification automatisée d'une pièce de rechange nécessaire (1') d'un système technique (10), présentant les étapes :
- de localisation, par le biais d'un terminal électronique mobile (2) d'un technicien de maintenance (WP), d'un composant à remplacer (1) du système technique (10), sur la base d'une analyse des erreurs du système technique (10) effectuée au préalable lequel terminal présentant une unité de capture d'images (2a) pour l'acquisition optique de données d'images (BD),
- de capture de données d'images (BD) à partir du composant à remplacer localisé (1) par le biais du terminal électronique mobile (2),
- d'identification automatisée du composant à remplacer (1) sur la base des données d'images (BD) et sur la base de données de pièces de rechange (ED) d'une base de données de pièces de rechange électronique (3), dans lequel l'identification du composant à remplacer (1) a lieu par le biais de l'utilisation d'un algorithme à base d'IA,
- d'identification automatisée de la pièce de rechange nécessaire (1') sur la base du composant à remplacer identifié (1) et des données de pièces de rechange (ED), dans lequel l'étape de l'identification automatique du composant à remplacer (1) comprend les étapes partielles :
- de détermination si le composant à remplacer (1) est identifiable sans ambiguïté, sur la base d'une comparaison des données d'images (BD) avec les données de pièces de rechange (ED) de la base de données de pièces de rechange électronique (3),
- dans le cas où le composant à remplacer (1) n'est pas identifiable sans ambiguïté, de détermination d'une demande spécifique (A1) auprès d'un technicien de maintenance (WP) au sujet d'une interaction appropriée avec le terminal électronique mobile (2) afin d'identifier le composant à remplacer (1) sur la base des données d'images (BD) et des données de pièces de rechange (ED) de la base de données de pièces de rechange électronique (3), dans lequel la demande spécifique (A1) présente une demande automatisée de marquage et/ou de segmentation des codes d'identification (IC) représentés dans les données d'images (BD) du composant à remplacer (1).

2. Procédé selon la revendication 1, dans lequel la demande spécifique (A1) présente une demande au sujet d'une des interactions spécifiques suivantes :
- dans le cas où aucun marquage et/ou aucune segmentation n'a été entrepris par le technicien de maintenance (WP), une demande automatisée pour la saisie d'un code d'identification (IC) du composant à remplacer (1),
- dans le cas où le composant à remplacer (1) est un composant électrique ou pneumatique, une demande automatisée pour la saisie d'une désignation de composant sur la base d'un schéma de commutation électrique ou pneumatique affiché du système technique (10) par le biais du technicien de maintenance (WP).

3. Procédé selon l'une quelconque des revendications précédentes, dans lequel l'identification automatisée du composant à remplacer (1) sur la base des données d'images (BD) comprend :
- une présentation de données d'identification provisoires (ID) du composant à remplacer identifié (1) sur le terminal mobile (2) du technicien de maintenance (WP) et
- une demande (A2) au sujet d'une saisie d'une confirmation (B) d'une identification correcte du composant à remplacer (1) par le biais du technicien de maintenance (WP).

4. Procédé selon l'une quelconque des revendications précédentes, dans lequel dans le cas où aucune identification automatisée sans ambiguïté ou correcte du composant à remplacer (1) ne s'est produite, le technicien de maintenance (WP) est automatiquement invité, sur la base des données de pièces de rechange (ED) de la base de données électronique de pièces de rechange (3) à procéder manuellement à l'identification du composant à remplacer (1) par identification et sélection de celui-ci dans ladite base de données électronique de pièces de rechange (3) et ; les données de pièces de rechange (ED) de ladite base de données électronique de pièces de rechange (3) sont affichées à l'attention du technicien de maintenance (WP).

5. Procédé selon la revendication 4, dans lequel dans le cas où aucune identification automatisée sans ambiguïté ou correcte ne s'est produite,
- un message de demande (A1a) est transmis de manière automatisée au technicien de maintenance (WP) pour acquérir des données d'images détaillées (DBD) à partir de perspectives différentes du composant à remplacer (1) avec le terminal mobile (2),
- des données de pièces de rechange complétées (EED) sont générées de manière automatisée, dans lequel les données d'images détaillées (DBD) et les informations sur le composant à remplacer identifié manuellement et sélectionné (1) sont ajoutées aux données de pièces de rechange (ED) de la base de données de pièces de rechange électronique (3) et
- un entraînement automatisé de l'identification automatisée sur la base de données de pièces de rechange complétées (EED) de la base de données de pièces de rechange électronique (3) est mis en œuvre.

6. Procédé selon l'une quelconque des revendications précédentes, dans lequel après une identification réussie du composant à remplacer (1) au moins une des étapes supplémentaires automatisées suivantes est entreprise pour un processus de remplacement du composant à remplacer identifié (1) :
- affichage d'une demande pour la commande d'une pièce de rechange adaptée (1') et réception d'une saisie du technicien de maintenance (WP) pour la commande de la pièce de rechange adaptée (1'),
- affichage d'une demande pour la saisie du nombre (Z) des pièces de rechange à commander (1') et réception de la saisie du nombre (Z) par le technicien de maintenance (WP),
- affichage d'outils recommandés et/ou d'accessoires techniques recommandés destinés au composant à remplacer identifié (1) et affichage d'une demande de sélection et de commande des accessoires techniques et réception, de la part du technicien de maintenance (WP), d'une saisie portant sur la sélection et la commande des accessoires techniques,
- affichage d'une demande pour la saisie d'une adresse de livraison (LA) pour les pièces de rechange commandées (1') et les accessoires commandés et réception d'une saisie d'une adresse de livraison (LA) par le technicien de maintenance (WP),
- affichage d'une communication avec une confirmation (B1) et un résumé (ZF) de la commande.

7. Procédé selon l'une quelconque des revendications précédentes, dans lequel après la livraison d'une pièce de rechange (1") des données d'images (BD) de la pièce de rechange livrée (1") sont capturées et sur la base des données d'images (BD) et des données de pièces de rechange (ED) de la banque de données de pièces de rechange (3) il est vérifié si la pièce de rechange livrée (1") correspond à la pièce de rechange identifiée (1').

8. Procédé selon l'une quelconque des revendications précédentes, dans lequel après la livraison d'une pièce de rechange (1") sur la base des données d'identification de la pièce de rechange livrée (1") et sur la base d'un manuel de maintenance électronique (EH) des indications (AW) pour un remplacement du composant à remplacer identifié (1) par la pièce de rechange livrée (1") sont affichées au technicien de maintenance (WP).

9. Procédé pour l'entraînement de l'étape pour l'identification automatisée du composant à remplacer sur la base des données d'images et des données de pièces de rechange d'une base de données électronique de pièces de rechange, dans le procédé pour l'identification automatisée d'une pièce de rechange nécessaire (1') d'un système technique (10) selon l'une quelconque des revendications 1 à 8 :
- génération de données d'entraînement étiquetées (TD), lesquelles comprennent :
- des données de pièces de rechange (ED) d'une banque de données de pièces de rechange (3) de composants techniques (1) d'un système technique (10),
- des données d'images (BD), acquises par le biais d'un terminal mobile (2), du composant technique (1) du système technique (10),
- des données d'identification correctes (IDₖ) de composants techniques (1) par rapport aux données d'images acquises (BD),
- réalisation de l'étape d'identification automatisée d'une pièce de rechange (1') sur la base des données d'images acquises (BD), des données d'identification (ID) étant déterminées pour des composants techniques (1),
- adaptation du procédé automatisé sur la base des données d'identification (ID) déterminées automatiquement et des données d'identification correctes (IDₖ) des composants techniques (1) des pièces de rechange associées (1').

10. Procédé selon la revendication 9, dans lequel pour la génération des données d'entraînement étiquetées (TD) les données d'image (BD) des composants techniques (1) sont capturées dans un état dans lequel les composants techniques (1) sont incorporés dans le système technique (10) et/ou sont enregistrées à partir de points de vue différents.

11. Système d'identification (80), présentant :
- une unité de localisation (81) pour la localisation d'un composant à remplacer (1) d'un système technique (10) sur la base d'une analyse des erreurs du système technique (10) mise en œuvre,
- une unité de capture d'images (2a) pour l'enregistrement de données d'images (BD) du composant à remplacer localisé (1),
- une base de données de pièces de rechange électronique (3), laquelle comprend des données de pièces de rechange (ED) concernant des composants pouvant être remplacés (1) dans un système technique (10),
- une unité d'identification (82) pour l'identification automatisée du composant à remplacer (1) sur la base des données d'images (BD) et sur la base de données de pièces de rechange (ED) de la base de données de pièces de rechange électronique (3) et pour l'identification automatisée de la pièce de rechange nécessaire (1') sur la base du composant à remplacer identifié (1) et des données de pièces de rechange (ED), dans lequel l'identification du composant à remplacer (1) se produit par le biais de l'utilisation d'un algorithme à base d'IA et dans lequel l'étape de l'identification automatisée du composant à remplacer (1) comprend les étapes partielles :
- de détermination si le composant à remplacer (1) est identifiable sans ambiguïté, sur la base d'une comparaison des données d'images (BD) avec les données de pièces de rechange (ED) de la base de données de pièces de rechange électronique (3),
- dans le cas où le composant à remplacer (1) n'est pas identifiable sans ambiguïté, de détermination d'une demande spécifique (A1) à un technicien de maintenance (WP) au sujet d'une interaction appropriée avec le terminal électronique mobile (2) pour l'identification du composant à remplacer (1) sur la base des données d'images (BD) et des données de pièces de rechange (ED) de la base de données de pièces de rechange électronique (3), dans lequel la demande spécifique (A1) présente une demande automatisée pour le marquage et/ou la segmentation de code d'identification (IC) représenté dans les données d'images (BD) du composant à remplacer (1).

12. Produit de programme informatique avec un programme informatique, lequel peut être chargé directement dans une unité de mémoire d'un système de calcul, avec des sections de programme permettant d'exécuter un procédé selon l'une quelconque des revendications 1 à 10, lorsque le programme informatique est exécuté dans le système de calcul.

13. Support lisible par ordinateur, sur lequel sont stockées des sections de programme exécutables par une unité de calcul, pour exécuter un procédé selon l'une quelconque des revendications 1 à 10, lorsque ces sections de programme sont exécutées par l'unité de calcul.
